# EUROPEAN PATENT APPLICATION

(11) **EP 3 748 554 A1**
(43) Date of publication of application: **09.12.2020**
(21) Application number: 19179136.7
(22) Date of filing: 07.06.2019
(51) Int. Cl.: G06Q 10/00

(54) **ELECTRONIC PAYMENT SYSTEM**

(71) Applicant: Centreline Payments Ltd, Silgo (IE)
(72) Inventor: Ryan, David, Co. Sligo (IE); Roper, Paul, Co. Sligo (IE); Romhanyi, Patrick, Co. Sligo (IE)
(74) Representative: Tomkins & Co

(57) **Abstract**

An electronic payment system comprising a plurality of communication nodes: the plurality of communication nodes comprising: a source node (A); an approval node (B); a payment distribution node (X); a plurality of payee nodes comprising at least a first payee node (E), a second payee node (D) and a third payee node (C).

## Description

### Field of the Invention

The present invention is directed to an electronic payment system. In particular, it is directed to a hierarchical type of payment from a source to potential more than one recipients.

### Background to the Invention

Many industry models require the interaction of multiple service and goods providers to interact in order for a given project to be completed. These providers form a type of project hierarchy whereby more specialised or individualised services are provided at the lower levels of the hierarchy while more broad services or management type services are provided in the middle and higher levels of the hierarchy. At the top of the hierarchy model is typically a client who has requested the implementation of the project and who bears the overall costs of the project's completion. It can be unwieldy for a client to interact with all levels of the hierarchy. Thus, in a typical project model, a client may interact only with a single point of contact, for example a project manager or a project design team, while the project design team will engage with service providers at lower hierarchy levels.

In a typical construction type project, a client will engage with such a design team. The design team will then deal with a main contractor for the project. The main contractor will in turn deal with sub-contractors for different parts of the project. And the sub-contractors will in turn deal with suppliers for the project. Typically as a project proceeds, payment for stages of works will be made from the client. The design team will approve or certify the funds required to pay the various contractors who have been engaged and typically a client will pay funds to the main contractor. Payment should then be distributed from the main contractor to the relevant sub-contractors and further down the line to the relevant suppliers. However, it can be the case that payments made to contractors are not distributed in a timely manner to sub-contractors and suppliers. This can lead to project delays as sub-contractors and suppliers may withdraw their services until payment is received. Furthermore, it may also not be in a supplier's interest for a main contractor to know what profit margin is added between the supplier and a sub-contractor.

Payments made from a single source to be received by multiple sources along a "chain" of payments are often subject to blocking or delay of payment at one party in the chain. A system to facilitate distribution of payment among multiple recipients would be an improvement over the current state of the art.

### Summary of the Invention

The present invention provides an electronic payment system comprising a payment distribution node (X) for communication with a plurality of communication nodes: the plurality of communication nodes comprising:
a plurality of nodes comprising at least a first payee node (C), a second payee node (D) and an approval node (B);
the payment distribution node (X) configured to:
   receive from the first payee node (C), confirmation of a first payment request from the second payee node (D) to the first payee node (C), the first payment request comprising a first weighting factor;
receive from the approval node (B), confirmation of a second payment request from the first payee node (C) to the approval node (B); the second payment request comprising a second weighting factor wherein the second weighting factor incorporates the first weighting factor; the second payment request configured such that the request is transferable from the first payee node to the approval node while denying the approval node (B) access to the values of the first and second weighting factors;
receive, from the approval node, approval for payment of the second payment request.

This is advantageous as it provides that requests for payment can be made to a third party (B) without providing the third party with full information regarding the weighting factor applied to the first and second payment requests, and thus the amounts to be paid to the second and first parties (D) and (C). This provides confidentiality with respect to payments to be made to the second and first parties (D) and (C). Furthermore, receiving confirmation of the payment request is advantageous as it provides that the payment distribution node (X) is informed that a payment request has been verified by its recipient. Furthermore, receiving approval from the approval node indicates that a given payment may proceed and that the request for payment has be verified.

The electronic payment system may be further configured to:
receive from the second payee node, confirmation of a third payment request from a third payee node (E) to the second payee node (D); the third payment request comprising a third weighting factor; the third payment request configured such that the request is transferable from the third payee node (E) to the second payee node (D) while denying the second payee node (D) access to the value of the third weighting factors.

Once again, this is advantageous as it provides that requests for payment can be made to a payee node (D) without providing full information regarding weighting factors applied to the requests, and thus the amounts to be paid to the third payee node (E). This provides confidentiality with respect to payments to be made to the third payee node (E).

Based on the approval for payment of the second payment request: the payment distribution node (X) is configured to transmit at least one of:
a first electronic payment to the first payee node (C) based on the second weighting factor;
a second electronic payment to the second payee node (D) based on the first weighting factor.

Furthermore, based on the approval for payment of the second payment request: the payment distribution node (X) is configured to transmit at least one of:
a first electronic payment to the first payee node (C) based on the second weighting factor;
a second electronic payment to the second payee node (D) based on the first weighting factor;
a third electronic payment to the third payee node (E) based on the third weighting factor.

This is advantageous as a single source, i.e. the payment distribution node, may distribute payments to multiple payees. As such, no single payee is reliant on a further payee to distribute payments along a chain, thus preventing delays in payment.

Based on the approval for payment of the second payment request, the payment distribution node is configured to:
transmit from the payment distribution node (X) to the first payee node (C) an electronic payment based on the second weighting factor while denying the first payee node (C) access to the values of the first weighting factor, the electronic payment accessible by the first payee node on the condition that an electronic payment is transferred from the first payee node (C) to the second payee node (D).

Furthermore, based on the approval for payment of the second payment request, the payment distribution node is configured to:
transmit from the payment distribution node (X) to the first payee node (C) an electronic payment based on the second weighting factor while denying the first payee node (C) access to the values of the first and third weighting factors, the electronic payment accessible by the first payee node on the condition that an electronic payment is transferred from the first payee node (C) to the second (D) and third payee nodes (E).

This is advantageous as it provides for distribution of payments in circumstances where a chain type of payment is to be utilised. For example, the electronic payment transmitted from the payment distribution node (X) to the first payee node (C) may be configured to provide a payment of 50% of a sum to the first payee node (C) and further configured to transfer the remaining 50% to the second and third nodes (D) and (E) along with the weighting factors associated with the payment request for those nodes. However, the first payee node (C) will be denied access to the value of the weighting factors so will be denied information as to how the remaining 50% of the sum will be distributed between second and third nodes (D) and (E). As such, while the first payee node (C) serves to transfer an electronic payment between additional parties, the information gained by (C) as to the value of the payment to (D) and (E) is limited to the percentage remaining of the full payment once its own payment is deducted. Furthermore, payment may only be deducted by C once the value of the payments to be distributed to D (or to D and E) have been distributed by C. As such, C cannot delay or prevent distribution of payments without also denying payment to themselves.

Each of the first, second and third electronic payment may comprise a transfer of funds. This is advantageous as it provides for the electronic transfer of funds between parties rather than necessitating a physical exchange of funds.

The plurality of communication nodes further may comprise a source node (A) for providing funds; and
wherein the approval node (B) is configured to transmit a request for funds to the source node (A); the request for funds based on the second payment request, and;
wherein the payment distribution node is further configured to receive a transfer of funds from the source node (A).

This is advantageous as it provides that a source node, which for example may be a client in a project, is provided with a single point of contact from which a request for an approved amount of funds is received. This prevents a source node from receiving payments requests and/or requests for approval of funds amounts from multiple sources. Once funds are in place at the payment distribution node (X), the node (X) may commence distribution of the funds to the required payee nodes.

The payment distribution node (X) may be further configured to create a first link representing the first payment request upon confirming by the first payee node (C) of the first payment request, a second link representing the second payment request upon confirming by the approval node (B) of the second payment request, a third link representing the third payment request upon confirming by the second payee node (D) of the third payment request.

This is advantageous as it provides that the payment distribution node (X) has a linked record of a payment request between two payee nodes.

Confirmation by the first payee node (C) of the first payment request may comprise confirming the presence of the second weighting factor incorporating the first weighting factor while being denied access to the value of the first and second weighting factor.

This is advantageous as it provides that a payment request from a second payee to a first payee can be verified by the first payee while denying the first payee access to the payment conditions (indicated by the first weighting factor) imposed by the first payee on the second payee.

Confirmation by the approval node (B) of the content of the second payment request may comprise confirming the presence of the second weighting factor incorporating the first weighting factor while being denied access to the value of the first and second weighting factor.

This is advantageous as it provides that a payment request from a first payee to an approval node can be verified by the approval node while denying the approval node access to the payment conditions (indicated by the second weighting factor) imposed by the first payee on the approval node and the payment conditions (indicated by the first weighting factor) imposed by the second payee on the first payee.

Electronic payment may be transferred from the payment distribution node to the third payee node (E) based on the third link, to the second payee node (D) based on the first link and to first payee node (C) based on the second link.

This is advantageous as it provides that the payment distribution node (X) can streamline payments to multiple nodes based on the links indicating verified payment requests between the nodes.

The nodes of the electronic payment system may be implemented by at least one of a server, a mobile communication device, a laptop computer, a desktop computer, a web application or any combination thereof.

This is advantageous as it provides that the payment distribution node (X) can be implemented across numerous platforms and provides that users of the system may interact with the system using numerous types of interface.

Further provided is a method for electronic payment system from a payment distribution node to a plurality of nodes: the method comprising:
receiving from a first payee node (C), confirmation of a first payment request from a second payee node (D) to the first payee node (C), the first payment request comprising a first weighting factor;
receiving from an approval node (B), confirmation of a second payment request from the first payee node (C) to the approval node (B); the second payment request comprising a second weighting factor wherein the second weighting factor incorporates the first weighting factor; the second payment request configured such that the request is transferable from the first payee node to the approval node while denying the approval node (B) access to the values of the first and second weighting factors;
receiving, from the approval node, approval for payment of the second payment request.

The method may further comprise receiving from the second payee node, confirmation of a third payment request from a third payee node (E) to the second payee node (D); the third payment request comprising a third weighting factor; the third payment request configured such that the request is transferable from the third payee node (E) to the second payee node (D) while denying the second payee node (D) access to the value of the third weighting factors.

### Brief Description of the Drawings

**Figure 1** is a schematic diagram of a payment system according to the invention showing a payment request from a subcontractor to a main contractor
**Figure 2** is a schematic diagram of a payment system according to the invention showing a payment request from a subcontractor to a main contractor as well as a payment request from a main contractor to a design team
**Figure 3** is a schematic diagram of a payment system according to the invention showing a confirmed request between a supplier and a subcontractor and between a subcontractor and main contractor as well as a payment request from a main contractor to a design team
**Figure 4** is a schematic diagram of a payment system according to the invention showing a multiple payment requests between suppliers and subcontractors, between subcontractors and a main contractor and between a main contractor and a design team
**Figure 5** is a schematic diagram of a payment system according to the invention showing nodes interacting directly with the payment distribution node showing payment transfer from a client to the payment distribution node, and from the payment distribution node to the main contractor, sub-contractor and supplier.
**Figure 6** is a schematic diagram of a payment system according to the invention showing payment transfer from a client to the payment distribution node, and from the payment distribution node to the sub-contractor and supplier, via the main contractor.

### Detailed Description

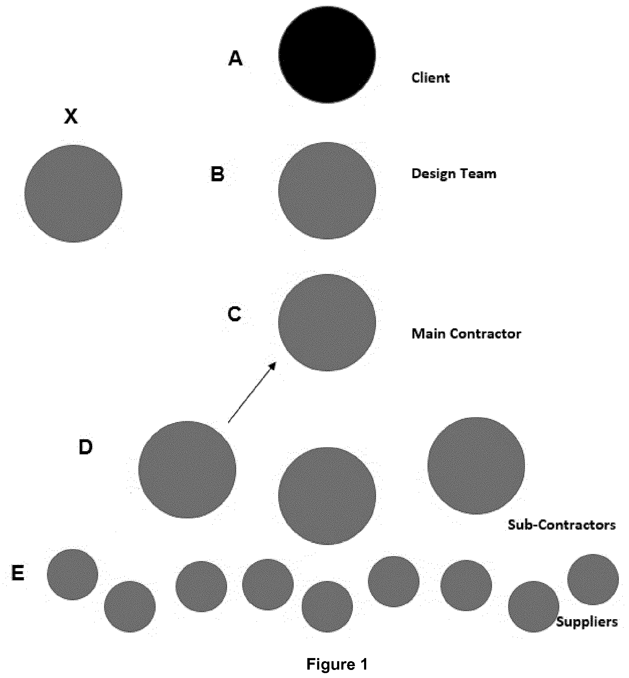

**Figure 1** is a schematic diagram of a payment system according to the invention.

The different parties that are potentially involved in a project, for example a construction type project are shown, namely Supplier, E, sub-contractor, D, main contractor, C, design team, B, client A, and the payment system according to the invention comprising a payment distribution node X. Any of supplier, E, sub-contractor, D, main contractor, C, design team, B, client A can potentially interact with X.

The electronic payment system comprises a payment distribution node (X) for communication with a plurality of communication nodes. The plurality of communication nodes comprises a plurality of payee nodes comprising at least a main contractor (C), a sub-contractor (D) and a design team (B).

The payment distribution node (X) is configured to receive confirmation of a first payment request from a sub-contractor (D) to a main contractor (C). The first payment request comprises a first weighting factor. The first weighting factor may indicate for example, the sub-contractor's charges over and above the supplied goods or services or a charge applied to the goods or services.

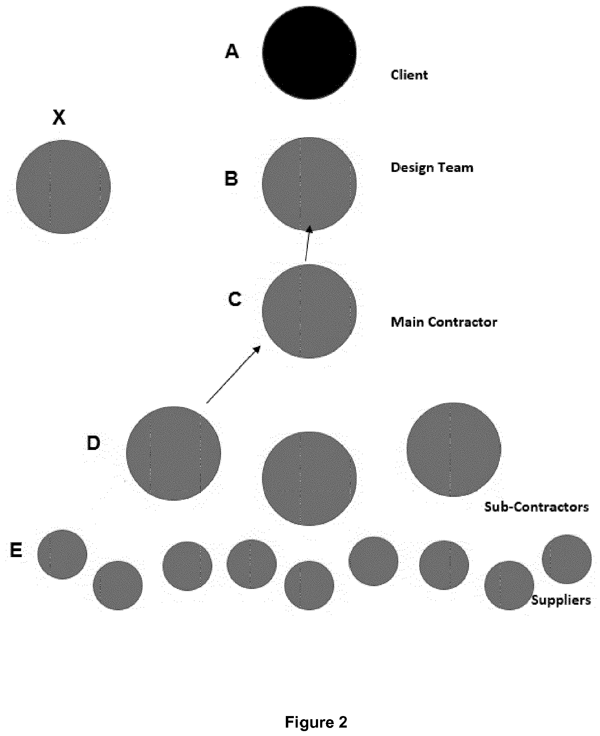

The payment distribution node (X) is configured to receive confirmation of a second payment request (**Figure 2**) from the main contractor (C) to the approval node (B). The second payment request comprises a second weighting factor wherein the second weighting factor incorporates the first weighting factor. The second weighting factor may indicate for example, the main contractor's charges over and above the sub contractor's charges.

The second payment request is configured such that the request is transferable from the main contractor (C) to the approval node (B) while denying the approval node (B) access to the values of the first and second weighting factors.

The nodes may further comprise a supplier (E). The supplier may send a third payment request to the sub-contractor (D). The third payment request comprises a third weighting factor. The third weighting factor may indicate for example, the supplier's charges over and above the supplied goods. The third payment request may be configured to be integrated into the first payment request from the sub-contractor to the main contractor. In this manner, the supplier's charges are accounted for in the sub-contractor's payment request to the main contractor. In this scenario, the main contractor is denied access to the values of the first weighting from the sub-contractor and the third weighting from the supplier.

A project may include interactions between sub-contractors and main contractors and the design team. As such, payments approved by the design team may be conducted via the payment distribution node to just sub-contractors and main contractors. For the purposes of this description, a request from a sub-contractor to a main contractor is termed a "first payment request". Accordingly, a request from a main contractor to the design team is termed a "second payment request". Furthermore, a project may include interactions between a supplier, sub-contractor, main contractor and a design team. In such a scenario, a request from a supplier to a sub-contractor is termed a "third payment request" even though in such a scenario, the "third payment request" from a supplier may be sent before a first or second request.

At the beginning of a project, a supplier, E, may input materials dispatched to a construction site by inputting a project identification number and a sub-contractor identification number. This information may be inputted to the payment distribution node (X). The payment distribution node along with the other described nodes may take the form of at least one of a server, a mobile communication device, a laptop computer, a desktop computer, a web application or any combination thereof.

The information input by the supplier may be a product code, batch number, quantity and the rates or cost. The information which is passed up the supply chain will be the product code and the batch number. This information will pass to the sub-contractor, main contractor and the design team with the quantities and rates only visible to the sub-contractor. The quantities and rates are used to provide the third weighting factor which forms part of the third payment request from the supplier (E) to the sub-contractor (D) which is sent to the payment distribution node (X).

At the point of the sub-contractor (D) submitting a valuation of the works to date to the main contractor (C), the supplier valuation will begin in a new interim period, i.e. a stage of the project with a given valuation.

At the point of submission of the first interim valuation to the main contractor, the sub-contractor will need to reach agreement with his suppliers. This will be achieved by checking the materials which were delivered to site against the information input in the supplier claim. As such, the payment distribution node (X) is further configured to receive confirmation from the sub-contractor (D) of the content of the third payment request. Once the SC and the supplier have agreed to the valuation it may be notified to the payment distribution node X and then stored into the system. This means once the sub-contractor receives payment for this interim period the supplier is due a payment. The electronic payment system may be configured such that the sub-contractor (D) cannot redeem a payment from the system until the supplier (E) has been paid.

The sub-contractor (D) will then submit his payment request (the first payment request) to the main contractor (C) (Figure 2), and once the claim has been sent the sub-contractor will then input the total for the interim period to the system. Once the total has been input, the main contractor (C) can then see the total sent from the sub-contractor (D) for this interim period and will then agree or make a recommendation for payment. As such, the payment distribution node (X) is further configured to receive confirmation from the main contractor of the content of the first payment request.

Once the payment total has been agreed between the sub-contractor and the main contractor it is stored into the system. The electronic payment system may be configured such that once the main contractor has been paid they cannot withdraw their payment until the sub-contractor has been paid.

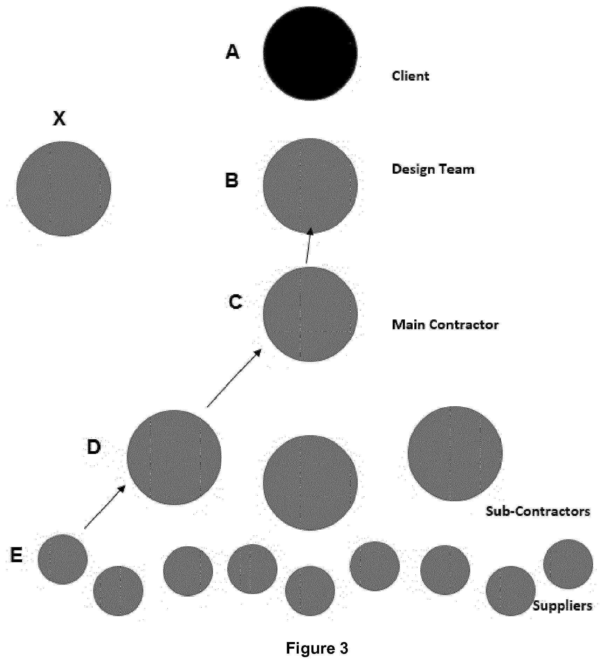

Once the supplier, sub-contractor and main contractor linked claims have been agreed, the main contractor will submit their valuation of the works to date to the design team (B) for payment, i.e. the second payment request **(****Figure 3****).** The design team will agree a payment for this period with the main contractor and the period total will be processed for payment.

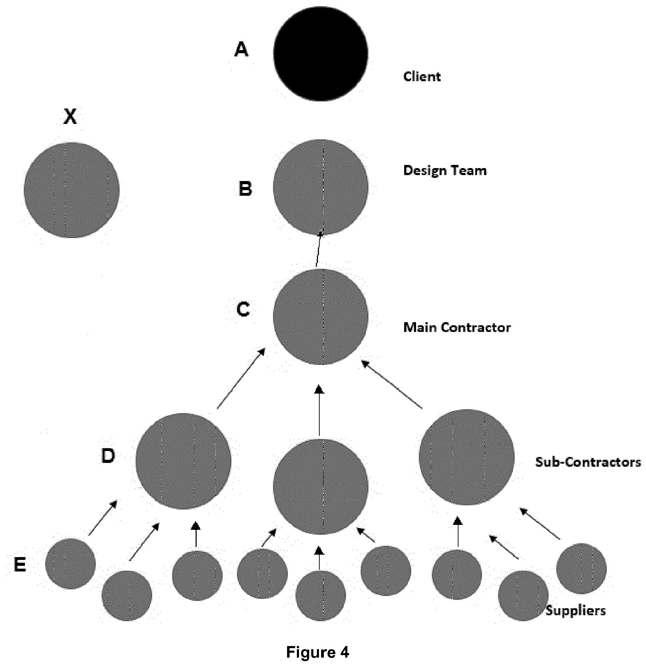

**Figure 4** shows a schematic wherein all values for the interim payment have been agreed by the shareholders of the project. While a single payment is described above, it is envisaged that multiple payments based on multiple payment requests may be handled by the system.

As such, the breakdown of the payments as shown in Figure 4 is as follows:
▪ 1 encrypted payment of an agreed value to the Main Contractor based on 1 "second" payment request from the Main Contractor
▪ 3 encrypted payments of an agreed value to the Sub-Contractors based on 3 "first" payment requests from Sub-Contractors
▪ 9 encrypted payments of an agreed value to the suppliers based on 9 "third" payment requests from suppliers

The value of the individual weightings in the payment requests will not be known to the client as that would allow the calculation of rates and margins. Ultimately, the client will be required to provide funds to make payments to the various parties.

As such the plurality of communication nodes further comprises a client or source node (A) for providing funds and design team or approval node (B) for requesting funds from the client (A). The payment distribution node (X) is further configured to: receive approval of the second payment request from the design team (B). The second payment request is received by the design team (B) from the main contractor (C). Funds are requested from the client (A) by the design team (B) based on the second payment request.

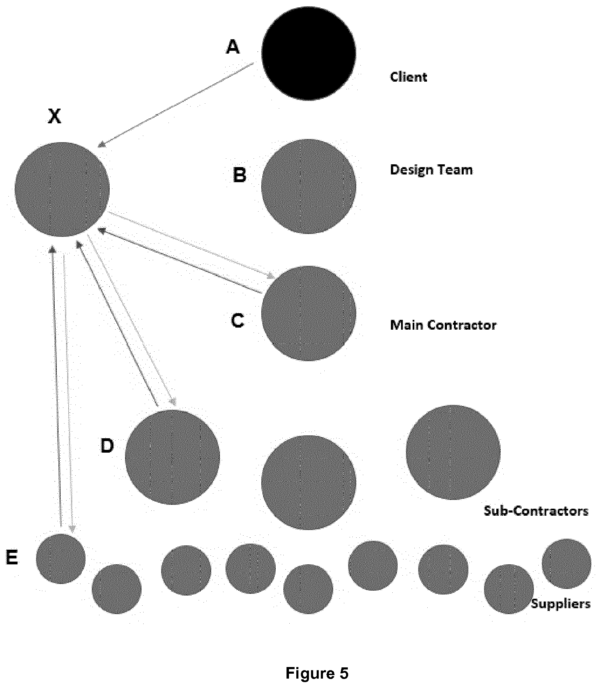

Based on the approval for payment of the second payment request: the payment distribution node (X) is configured to transmit to the supplier (E) a first electronic payment based on the third weighting factor; transmit to the sub- contractor (D) a second electronic payment based on the first weighting factor and transmit to the main contractor (C) a third electronic payment based on the second weighting factor **(****Figure 5****).**

Each payment request comprises a weighting known only to the sender of the request. For example, a third payment request from a supplier to a sub-contractor will comprise a third weighting. The weighting will, in effect, be the amount charged by the supplier for the services including profit or margin added by the supplier once they have covered their costs. For example, the supplier may have costs of €1,000 while their payment request comprises a request for €1,250. As such, the third weighting factor in this example is 25% (250/1000 x 100). The first payment request from the sub-contractor to the main contractor may thus include the third weighting factor from the supplier plus an additional first weighting factor added by the sub-contractor. The sub-contractor may submit a payment request to the main contractor of €5,000 including the cost of the payment request from the supplier of €1,250, their own additional costs of €1,500 plus their own charge for services of €2,250. As such, the first weighting factor is 45% (2250/5000 x 100). It should be noted that the third weighting factor may be included in or accounted for in the first weighting factor. However, the main contractor would be unaware of the respective first or third weighting factors as the first payment request (in this example, a request for €5000) will be presented to the main contractor without indication of the component weightings. The main contractor sees the request as a single data block rather than subdivided blocks indicating the values and weightings associated with the sub-contractor and suppliers. In this manner, a main contractor can confirm a payment request amount while being denied access to the values of the first and third weighting factors. Similarly, a design team will be denied access to the first and second weightings applied to the second payment request from the main contractor. However, as each of the suppliers, sub-contractors and main contractors separately submit their payment requests to payment distribution node, the payment distribution node has information with respect to the individual weightings of each request and can make the appropriate payments once funds are provided by the client.

Once the distribution of payment has been completed the values can be redeemed directly from payment distribution node X to each recipient's bank account.

This system streamlines the payment process as well as ensuring that all parties of the project receive payment. The system can also ensure compliance with payment deadlines set out in construction regulations.

A payment flow using the system according to the invention will now be described in more detail based on an example of a payment made from a client (A) to a main contractor (C), sub-contractor (D) and a supplier (E) using the a payment distribution node X. The Client (C) interacts with the Design Team (B) and the payment distribution node X.
1. Data representing a third payment request is input by E to X based on an order received from D. This data is sent from E to D for confirmation. This data represents a third payment request.
2. D confirms the data from E is correct. Upon confirmation of the payment request by D, X creates a link between X and E representing the payment request.
3. D inputs data representing a first payment request to X which incorporates the data provided by E.
4. This data is sent from D to C for confirmation. This data represents a first payment request.
5. C confirms the data from D is correct. Upon confirmation of the payment request by C, X creates a link between X and D representing the payment request which incorporates the data input by E and D.
6. C can only view the data provided by D as a single "block" and will not be aware of the breakdown of the data into separate blocks (i.e. C will not aware of the value of the weightings associated with the payment requests).
7. C inputs data to X which contains the data provided by D and E.
8. This data is sent to B for confirmation. This data represents a second payment request.
9. B confirms the data from C is correct. Upon confirmation of the payment request by B, X creates a link between X and C representing the payment request which incorporates the data input by C, E and D.
10. B can only view the data provided by C as a single "block" and will not be aware of the breakdown of the data into separate blocks (i.e. B will not aware of the value of the weightings associated with the payment requests).
11. Once the data has been confirmed by B an instruction is sent to A to approve an electronic payment indicated in the second payment request. A performs an electronic transfer of funds to X.
12. The information passed from B to A will contain the data sent by E, D, and C but will be one block of data only. B will not have visibility of the weightings of any payment request.
13. Upon receipt of funds from A, an electronic payment from X to C, X to D and X to E is performed. In effect, payments from A to C, D and E are made through X.
14. X is aware of the confirmed payment requests between the linked nodes.
15. X distributes the values of the payment requests between the linked nodes.
16. The data representing the payment requests is then redeemable from X from each of E, D and C.

The above is a basic breakdown of the payment process containing one of each party through the system of the invention. In this example, this transfer of data between parties of a construction project is based on one sub-contractor dealing with one supplier and one main contractor. In further embodiments, there will be a plurality of E dealing with a plurality of D with a plurality of C. Alternatively, there may be no supplier E in the chain, and one or a plurality of C deals only with one or a plurality of D. Accordingly, payments will only be made to C and D.

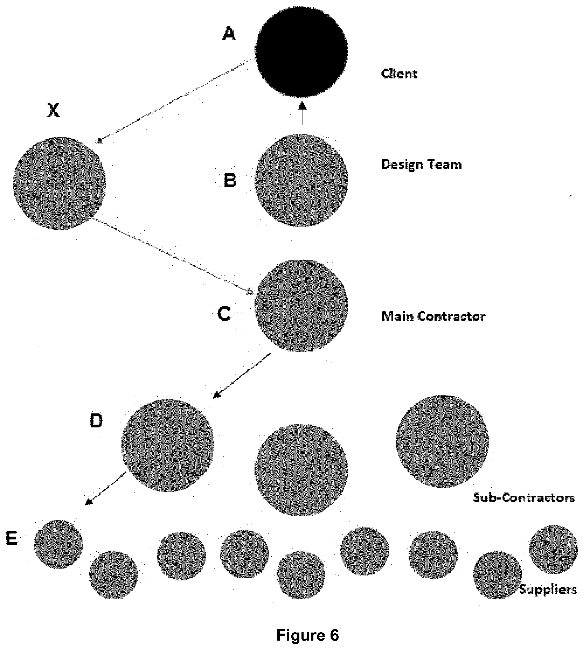

An alternative embodiment of a payment flow is shown in **Figure 6****.** In this embodiment, rather than the payment distribution node X making payments to each of C, D and E, a single transfer is made from X to C and payments are distributed from C to D and E. As above in an alternative, there may be no supplier in the chain, and one or a plurality of C deals only with one or a plurality of D. Accordingly, payments will only be made to C and D.

A basic payment from the client (A) as shown in **Figure 6** will flow as follows:
- The design team (B) will instruct the client (A) to pay the main contractor (C) the appropriate value for the interim period.
- The client (A) will issue payment to the payment distribution node X. A project identification number may also be provided.
- Payment distribution node X will issue payment to the C based on the value of the second payment request.
- The main contractor (C) will pass on an encrypted payment to the sub-contractor (D). Payment to the main contractor is conditional on subsequent payment being made to the sub-contractor. The main contractor will not be able to access funds until payment is made to the sub-contractor.
- Similarly, once the sub-contractor (D) has received the payment from the main contractor (C) he will pass on an encrypted payment to the suppliers (E). Again, payment to the sub-contractor is conditional on subsequent payment being made to the supplier.
- The payment from C to D is based on the first payment request while the payment from C to E is based on the third payment request.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. An electronic payment system comprising a payment distribution node (X) for communication with a plurality of communication nodes: the plurality of communication nodes comprising:
a plurality of nodes comprising at least a first payee node (C), a second payee node (D) and an approval node (B);
the payment distribution node (X) configured to:
receive from the first payee node (C), confirmation of a first payment request from the second payee node (D) to the first payee node (C), the first payment request comprising a first weighting factor;
receive from the approval node (B), confirmation of a second payment request from the first payee node (C) to the approval node (B); the second payment request comprising a second weighting factor wherein the second weighting factor incorporates the first weighting factor; the second payment request configured such that the request is transferable from the first payee node to the approval node while denying the approval node (B) access to the values of the first and second weighting factors;
receive, from the approval node, approval for payment of the second payment request.

2. The electronic payment system of claim 1, the payment distribution node further configured to:
receive from the second payee node, confirmation of a third payment request from a third payee node (E) to the second payee node (D); the third payment request comprising a third weighting factor; the third payment request configured such that the request is transferable from the third payee node (E) to the second payee node (D) while denying the second payee node (D) access to the value of the third weighting factors.

3. The electronic payment system of claim 1 wherein: based on the approval for payment of the second payment request: the payment distribution node (X) is configured to transmit at least one of:
a first electronic payment to the first payee node (C) based on the second weighting factor;
a second electronic payment to the second payee node (D) based on the first weighting factor.

4. The electronic payment system of claim 2 wherein:
based on the approval for payment of the third payment request: the payment distribution node (X) is configured to transmit at least one of:
a first electronic payment to the first payee node (C) based on the second weighting factor;
a second electronic payment to the second payee node (D) based on the first weighting factor;
a third electronic payment to the third payee node (E) based on the third weighting factor.

5. The electronic payment system of claim 1; wherein based on the approval for payment of the second payment request, the payment distribution node is configured to:
transmit from the payment distribution node (X) to the first payee node (C) an electronic payment based on the second weighting factor while denying the first payee node (C) access to the values of the first weighting factor, the electronic payment accessible by the first payee node on the condition that an electronic payment is transferred from the first payee node (C) to the second payee node (D).

6. The electronic payment system of claim 2; wherein based on the approval for payment of the second payment request, the payment distribution node is configured to:
transmit from the payment distribution node (X) to the first payee node (C) an electronic payment based on the second weighting factor while denying the first payee node (C) access to the values of the first and third weighting factors, the electronic payment accessible by the first payee node on the condition that an electronic payment is transferred from the first payee node (C) to the second (D) and third payee node (E).

7. The electronic payment system of any of claims 3 to 6 wherein each of the electronic payments comprise a transfer of funds.

8. The electronic payment system of any preceding claim wherein the plurality of communication nodes further comprises a source node (A) for providing funds; and
wherein the approval node (B) is configured to transmit a request for funds to the source node (A); the request for funds based on the second payment request, and;
wherein the payment distribution node is further configured to receive a transfer of funds from the source node (A).

9. The electronic payment system of any preceding claim, wherein the payment distribution node (X) is further configured to create a first link representing the first payment request upon confirming by the first payee node (C) of the first payment request.

10. The electronic payment system of claim 9 the payment distribution node (X) further configured to create a second link representing the second payment request upon confirming by the approval node (B) of the second payment request.

11. The electronic payment system of any of claims 2 to 10 the payment distribution node (X) further configured to create a third link representing the third payment request upon confirming by the second payee node (D) of the third payment request.

12. The electronic payment system of claim 11 such that electronic payment is transferred from the payment distribution node to the third payee node (E) based on third link, to the second payee node (D) based on the first link and to first payee nodes (C) based on the second link.

13. The electronic payment system of any preceding claim wherein the nodes are implemented by at least one of a server, a mobile communication device, a laptop computer, a desktop computer, a web application or any combination thereof.

14. A method for electronic payment system from a payment distribution node to a plurality of nodes: the method comprising:
receiving from a first payee node (C), confirmation of a first payment request from a second payee node (D) to the first payee node (C), the first payment request comprising a first weighting factor;
receiving from an approval node (B), confirmation of a second payment request from the first payee node (C) to the approval node (B); the second payment request comprising a second weighting factor wherein the second weighting factor incorporates the first weighting factor; the second payment request configured such that the request is transferable from the first payee node to the approval node while denying the approval node (B) access to the values of the first and second weighting factors;
receiving, from the approval node, approval for payment of the second payment request.

15. The method of claim 14, further comprising:
receiving from the second payee node, confirmation of a third payment request from a third payee node (E) to the second payee node (D); the third payment request comprising a third weighting factor; the third payment request configured such that the request is transferable from the third payee node (E) to the second payee node (D) while denying the second payee node (D) access to the value of the third weighting factors.
